# EUROPEAN PATENT SPECIFICATION

(11) **EP 2 360 044 B1**
(45) Date of publication and mention of the grant of the patent: **30.04.2014**
(21) Application number: 08878874.0
(22) Date of filing: 18.12.2008
(51) Int. Cl.: B60K 6/48, B60K 6/383, B60W 20/00, B60W 10/02, B60W 10/06, B60W 10/08, B60W 10/113

(54) **Transmission for hybrid vehicle**
Kraftübertragungsvorrichtung für Hybridfahrzeug
Transmission pour véhicule hybride

(43) Date of publication of application: 24.08.2011
(73) Proprietor: Honda Motor Co., Ltd., Minato-ku Tokyo 107-8556 (JP)
(72) Inventor: SHIBAHATA, Yasuji c/o HONDA R&D CO., LTD., Wako-shi Saitama 351-0193 (JP)
(74) Representative: Beder, Jens
(86) International application number: PCT/JP2008/003830
(87) International publication number: WO 2010/070706

(56) References cited:
- EP-A1- 1 232 891
- EP-A1- 1 232 891
- WO-A2-2007/058590
- DE-A1- 19 606 771
- FR-A1- 2 797 228
- FR-A1- 2 811 395
- JP-A- 8 109 950
- JP-A- 8 109 950
- JP-A- 2002 114 048
- JP-A- 2002 114 063
- JP-A- 2003 237 393
- JP-A- 2003 278 807
- JP-A- 2007 261 346

## Description

### Technical Field

The present invention relates to a transmission for a hybrid vehicle which has an internal combustion engine and an electric motor.

### Background Art

The transmission of this type for a hybrid vehicle transmits the power of an engine (internal combustion engine) or the power of a motor (electric motor) to the drive shafts of wheels through the intermediary of a speed changing unit. Further, depending on the traveling state of a vehicle or a selected gear shift stage in a speed changing unit, the power of the motor is added to the power of the engine and the combined power is transmitted to the drive shafts, or either one of the power of the engine or the power of the motor is used to drive the vehicle.

Meanwhile, in the case where a power shaft which outputs the revolution of the engine and an input shaft through which the power is input to a speed changing unit are in constant engagement, if, for example, the vehicle is caused to take off (start) only using the motor, then the revolution of the motor will be transmitted to the power shaft of the engine, which is in a halt state, through the input shaft of the speed changing unit, thereby preventing the power of the motor from being efficiently transmitted to the drive shafts. Further, at the time of deceleration while the vehicle is being driven on the engine, the motor is usually used as a generator thereby to accumulate electric power by regeneration, thus ensuring high energy efficiency. However, the constant engagement between the input shaft of the speed changing unit and the power shaft of the engine causes engine brake to be added, thus resulting in deteriorated regenerative efficiency at deceleration.

Hitherto, there has been known a transmission in which a friction engagement clutch, such as a wet clutch or a dry clutch, is provided between the power shaft of an engine and the input shaft of a speed changing unit to permit engagement/disengagement by the friction engagement clutch (refer to, for example, the pamphlet of International Publication Number 00/20243). The transmission is adapted to disengage an engine from a speed changing unit, thus making it possible to achieve driving by an electric motor alone without causing an engine drag. The transmission also prevents engine brake from being added when using the motor as a generator, so that higher regenerative efficiency at the time of deceleration can be achieved.

However, a friction engagement clutch, such as the wet clutch or the dry clutch, requires that an actuator for driving the clutch be provided. Therefore, if the friction engagement clutch is provided between the power shaft of the internal combustion engine and the input shaft, then the size and the weight of the transmission will be inevitably increased. In addition, it would be necessary to carry out control for actuating the friction engagement clutch according to a selected shift gear or the traveling state of the vehicle, inconveniently leading to complicated control. EP1232891A1 discloses a transmission for a hybrid vehicle with an internal combustion engine and a motor. The transmission comprises a speed changing unit which has a first input shaft and a second input shaft. The first input shaft is connected to a power shaft of the internal combustion engine and the second input shaft is connected to a power shaft of the motor. The transmission establishes a plurality of gear shift stages. Therefore, a clutch is provided which disengages the connection between the power shaft and the internal combustion engine and the first input shaft. The clutch is disposed between the power shaft of the internal combustion engine and the first input shaft.

### Disclosure of the Invention

In view of the above background, an object of the present invention is to provide a transmission for a hybrid vehicle which has a lightweight, compact structure and which is capable of disconnecting the power of an internal combustion engine and efficiently transmitting power without involving complicated control but with a shortened gear shifting time.

A transmission for a hybrid vehicle having an internal combustion engine and a motor in accordance with the present invention includes a speed changing unit which has a first input shaft connected to a power shaft of an internal combustion engine and a second input shaft connected to a power shaft of a motor and which establishes a plurality of gear shift stages, wherein a one-way clutch, which disengages the connection between the power shaft of the internal combustion engine and the first input shaft in the case where the rotational speed of the power shaft of the internal combustion engine is lower than the rotational speed of the first input shaft, is disposed between the power shaft of the internal combustion engine and the first input shaft.

The one-way clutch engages/disengages the connection between the power shaft of the internal combustion engine and the first input shaft. More specifically, if the rotational speed of the power shaft of the internal combustion engine becomes lower than the rotational speed of the first input shaft or if the rotational speed of the first input shaft becomes higher than the rotational speed of the power shaft of the internal combustion engine, then the connection between the power shaft of the internal combustion engine and the first input shaft will be automatically disengaged by the action of the one-way clutch.

Adopting the one-way clutch for engaging/disengaging the connection between the power shaft of the internal combustion engine and the first input shaft obviates the need for a heavy actuator provided in the case where, for example, a wet type or a dry type friction engagement clutch is used, thus permitting the transmission to be made lightweight and compact. In addition, engaging/disengaging the connection between the power shaft of the internal combustion engine and the first input shaft is accomplished simply by controlling the rotational speed of the power shaft of the internal combustion engine, thus preventing the control from becoming complicated.

Further, according to the present invention, the speed changing unit includes a first speed changing unit which has a first input shaft connected to the power shaft of the internal combustion engine and which establishes a plurality of gear shift stages and a second speed changing unit which has a second input shaft connected to a power shaft of the motor and which establishes a plurality of gear shift stages which are different from those of the first speed changing unit, wherein a connecting unit which selectively engages or disengages the connection between the first input shaft and the second input shaft is provided between the first speed changing unit and the second speed changing unit. The connecting unit comprises another one-way clutch which transmits a rotation or disconnects between the first input shaft and the second input shaft according to the rotational speed transmitted.

With this arrangement, the power of the motor can be output from an output shaft through the intermediary of gear shift stages of the second speed changing unit, so that the output of the motor can be controlled to a relatively low level while obtaining sufficient power, thus making it possible to reduce the size of the motor. Further, connecting the first speed changing unit and the second speed changing unit by the connecting unit allows the second speed changing unit to be used from the internal combustion engine side, so that the construction of the first speed changing unit can be simplified and the transmission can be therefore made lightweight and compact.

At this time, any one gear shift stage established by the second speed changing unit is preferably lower than any one gear shift stage established by the first speed changing unit. This makes it possible to increase the torque of the motor during a low-speed travel and to reduce the size of the motor, thus allowing the transmission to have a compact construction.

Further, any one gear shift stage established by the second speed changing unit is preferably higher than any one gear shift stage established by the first speed changing unit. This makes it possible to control the rotational speed of the power shaft of the motor to be relatively low even when the vehicle is traveling at a high speed by the power of the motor, and a reduced maximum rotational speed of the motor allows the size of the motor to be reduced, so that the transmission can be made compact.

Further, according to the present invention, at least one of the first speed changing unit and the second speed changing unit can be constructed of a stepless speed changing mechanism, such as a CVT (Continuously variable transmission), which continuously establishes gear shift stages. The CVT may not be capable of supplying a sufficient output in an area where a high torque is generated. According to the present invention, however, connecting the first speed changing unit to which the power of the internal combustion engine is supplied and the second speed changing unit to which the power of the motor is supplied allows the outputs of both the motor and the internal combustion engine to be supplied, making it possible to compensate for a deficient output in a high-torque area. Further, the drive on the motor can be maintained during an instantaneous idle running (coasting) when an accelerator (gas) pedal is turned off, thus making it easy to maintain a speed against a load variation.

Further, in the present invention, preferably, the first speed changing unit is constructed of a rotation transmitting element provided with a plurality of gears corresponding to the gear shift stages, and the rotation transmitting element is provided with a one-way clutch that engages or disengages the transmission of the rotation between gears according to the rotational speed to be transmitted. As an embodiment for this purpose, the one-way clutch of the rotation transmitting element may be provided between the gear and a supporting shaft that supports the gear. With this arrangement, when, for example, the gear and the supporting shaft are connected by the one-way clutch at a higher gear shift stage in the process for moving into a higher gear, the supporting shaft rotates at a higher speed due to the action of the speed change, causing automatic disengagement of the connection between the gear and the supporting shaft by the one-way clutch at a lower gear shift stage. Thus, the speed changing time can be shortened.

### Brief Description of the Drawings

[Fig. 1] It is a skeleton diagram of a transmission not according to of the present invention.
[Fig. 2] It is a skeleton diagram of a transmission not according the present invention.
[Fig. 3] It is a skeleton diagram of a transmission not according to the present invention.
[Fig. 4] It is a skeleton diagram of a transmission according to the first embodiment of the present invention.
[Fig. 5] It is a skeleton diagram of a transmission according to a second embodiment of the present invention.
[Fig. 6] It is a skeleton diagram of a transmission not according to the present invention.
[Fig. 7] It is a skeleton diagram of a transmission according to a third embodiment of the present invention.

### Best Mode for Carrying Out the Invention

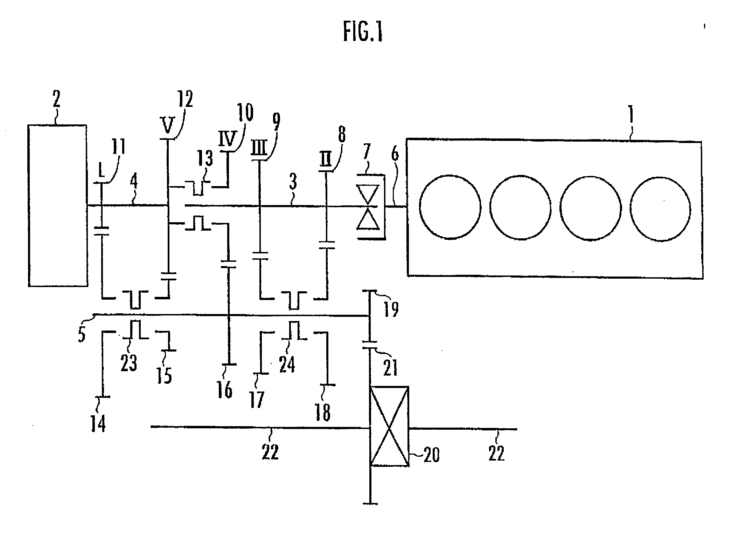

Figure 1 schematically illustrates a transmission for a hybrid vehicle. As illustrated in Fig. 1, a transmission is provided with an engine 1 (internal combustion engine) and a motor 2 (motor/generator) as the driving sources.
The transmission is further provided with a first input shaft 3, a second input shaft 4 and an output shaft 5, which are all rotatively mounted. The first input shaft 3 and the second input shaft 4 are disposed coaxially with each other, while the output shaft 5 is disposed in parallel to the first input shaft 3 and the second input shaft 4.

The first input shaft 3 is extendedly provided, being disposed coaxially with an engine power shaft 6 through which the power rotation from the engine 1 is output, and a one-way clutch 7 is provided between the first input shaft 3 and the engine power shaft 6. The engine power shaft 6 and the first input shaft 3 are automatically engaged/disengaged by the one-way clutch 7. More specifically, with a built-in connecting mechanism, the one-way clutch 7 connects the engine power shaft 6 and the first input shaft 3 when the rotational speed of the engine power shaft 6 becomes higher than the rotational speed of the first input shaft 3, or disengages the connection between the engine power shaft 6 and the first input shaft 3 when the rotational speed of the engine power shaft 6 becomes lower than the rotational speed of the first input shaft 3.

The first input shaft 3 serving as a gear supporting shaft has a second-speed drive gear 8 and a third-speed drive gear 9 coaxially and fixedly supported and a fourth-speed drive gear 10 coaxially and rotatively supported, which are arranged in this order from the end adjacent to the engine 1 (in this order from the right side in Fig. 1). The second input shaft 4 is formed integrally with the power shaft through which the power rotation from the motor 2 is output. The second input shaft 4 serving as a gear supporting shaft has a first-speed drive gear 11 and a fifth-speed drive gear 12, which are coaxially and fixedly supported from the end adjacent to the motor 2 (in this order from the left side in Fig. 1).

The first input shaft 3 is provided with a first connecting unit 13 constituted of a synchromesh mechanism. The first connecting unit 13 switches between a state in which the fourth-speed drive gear 10 securely engages with the first input shaft 3 and a state in which the first input shaft 3 and the second input shaft 4 are connected through the intermediary of the fifth-speed drive gear 12, and also disengages both the fourth-speed drive gear 10 and the fifth-speed drive gear 12 (the second input shaft 4) from the first input shaft 3 at a neutral position.

The output shaft 5 serving as a gear supporting shaft supports a first-speed driven gear 14 that engages the first-speed drive gear 11, a fifth-speed driven gear 15 that engages the fifth-speed drive gear 12, a fourth-speed driven gear 16 that engages the fourth-speed drive gear 10, a third-speed driven gear 17 that engages the third-speed drive gear 9, and a second-speed driven gear 18 that engages the second-speed drive gear 8, and also supports a final reduction drive gear 19. Among the gears, the fourth-speed driven gear 16 and the final reduction drive gear 19 are fixedly supported by the output shaft 5 and the remaining driven gears 14, 15, 17 and 18 are rotatively supported. The final reduction drive gear 19 engages a final reduction driven gear 21 of a differential gear mechanism 20 to drive a drive shaft 22 of the vehicle through the differential gear mechanism 20.

The output shaft 5 is provided with a second connecting unit 23 disposed between the first-speed driven gear 14 and the fifth-speed driven gear 15, and also provided with a third connecting unit 24 disposed between the second-speed driven gear 18 and the third-speed driven gear 17. The second connecting unit 23 switches between a state in which the first-speed driven gear 14 is fixedly connected to the output shaft 5 and a state in which the fifth-speed driven gear 15 is fixedly connected to the output shaft 5, and also disengages both the first-speed driven gear 14 and the fifth-speed driven gear 15 from the output shaft 5 at the neutral position. Similarly, the third connecting unit 24 switches between a state in which the second-speed driven gear 18 is fixedly connected to the output shaft 5 and a state in which the third-speed driven gear 17 is fixedly connected to the output shaft 5, and also disengages both the second-speed driven gear 18 and the third-speed driven gear 17 from the output shaft 5 at the neutral position.

Incidentally, the first input shaft 3 and the output shaft 5 and the rotation transmitting elements formed of the second-speed drive gear 8, the second-speed driven gear 18, the third-speed drive gear 9, the third-speed driven gear 17, the fourth-speed drive gear 10, and the fourth-speed driven gear 16, which are installed between the first input shaft 3 and the output shaft 5 to transmit rotations, constitute the first speed changing unit in the present invention to establish a second-speed gear shift stage II, a third-speed gear shift stage III, and a fourth-speed gear shift stage IV. Further, the second input shaft 4 and the output shaft 5 and the rotation transmitting elements formed of the first-speed drive gear 11, the first-speed driven gear 14, the fifth-speed drive gear 12, and the fifth-speed driven gear 15, which are installed between the second input shaft 4 and the output shaft 5 to transmit rotations, constitute the second speed changing unit in the present invention to establish a first-speed gear shift stage L and a fifth-speed gear shift stage V

The following will describe five speed gear shift stages (the first-speed gear shift stage L, the second-speed gear shift stage II, the third-speed gear shift stage III, the fourth-speed gear shift stage IV, and the fifth-speed gear shift stage V) in the transmission shown which has the aforesaid construction.

The first-speed gear shift stage L is established by setting the third connecting unit 24 at the neutral position and fixedly connecting the first-speed driven gear 14 to the output shaft 5 by the second connecting unit 23. At this time, if the first connecting unit 13 is set at the neutral position and the second input shaft 4 is disengaged from the first input shaft 3, then driving on the motor 2 alone can be accomplished. Further, connecting the first input shaft 3 to the second input shaft 4 by the first connecting unit 13 allows driving to be performed from both the motor 2 and the engine 1. When the driving is carried out by both the motor 2 and the engine 1, control is conducted such that the rotational speed of the engine power shaft 6 is higher than the rotational speed of the first input shaft 3 and the engine power shaft 6 and the first input shaft 3 are connected by the action of the one-way clutch 7 provided between the engine power shaft 6 and the first input shaft 3.

Further, the rotational driving force from the second input shaft 4 is transmitted to the output shaft 5 through the intermediary of the first-speed drive gear 11 and the first-speed driven gear 14 engaging the first-speed drive gear 11. Thus, the driving force of the first-speed gear shift stage L is output to the drive shaft 22 through the intermediary of the final reduction drive gear 19 and the final reduction driven gear 21.

The second-speed gear shift stage II is established by setting the second connecting unit 23 at the neutral position and by fixedly connecting the second-speed driven gear 18 to the output shaft 5 by the third connecting unit 24. At this time, connecting the second input shaft 4 to the first input shaft 3 by the first connecting unit 13 and setting the engine 1 to a halt state or controlling the rotational speed of the engine power shaft 6 to be lower than the rotational speed of the first input shaft 3 disengage the connection between the engine power shaft 6 and the first input shaft 3 by the action of the one-way clutch 7 provided between the engine power shaft 6 and the first input shaft 3, thus allowing driving on the motor 2 alone to be accomplished. Further, setting the first connecting unit 13 at the neutral position to disengage the first input shaft 3 from the second input shaft 4 and controlling the rotational speed of the engine power shaft 6 to be higher than the rotational speed of the first input shaft 3 cause the engine power shaft 6 and the first input shaft 3 to be connected due to the action of the one-way clutch 7 provided between the engine power shaft 6 and the first input shaft 3, thus allowing driving on the engine 1 alone to be accomplished. Further, connecting the second input shaft 4 to the first input shaft 3 by the first connecting unit 13 and controlling the rotational speed of the engine power shaft 6 to be higher than the rotational speed of the first input shaft 3 cause the engine power shaft 6 and the first input shaft 3 to be connected due to the action of the one-way clutch 7, thus making it possible to accomplish driving on both the motor 2 and the engine 1.

Then, the rotational driving force from the first input shaft 3 is transmitted to the output shaft 5 through the intermediary of the second-speed drive gear 8 and the second-speed driven gear 18 that engages the second-speed drive gear 8. Thus, the driving force of the second-speed gear shift stage II is output to the drive shaft 22 through the intermediary of the final reduction drive gear 19 and the final reduction driven gear 21.

The third-speed gear shift stage III is established by setting the second connecting unit 23 at the neutral position and fixedly connecting the third-speed driven gear 17 to the output shaft 5 by the third connecting unit 24. At this time, connecting the second input shaft 4 to the first input shaft 3 by the first connecting unit 13 and setting the engine 1 to the halt state or controlling the rotational speed of the engine power shaft 6 to be smaller than the rotational speed of the first input shaft 3 disengage the connection between the engine power shaft 6 and the first input shaft 3 by the action of the one-way clutch 7 provided between the engine power shaft 6 and the first input shaft 3, making it possible to accomplish driving on the motor 2 alone. Further, setting the first connecting unit 13 at the neutral position, disengaging the first input shaft 3 from the second input shaft 4, and controlling the rotational speed of the engine power shaft 6 to be higher than the rotational speed of the first input shaft 3 cause the engine power shaft 6 and the first input shaft 3 to be connected due to the action of the one-way clutch 7 provided between the engine power shaft 6 and the first input shaft 3, thus making it possible to accomplish driving on the engine 1 alone. Further, connecting the second input shaft 4 to the first input shaft 3 by the first connecting unit 13 and controlling the rotational speed of the engine power shaft 6 to be higher than the rotational speed of the first input shaft 3 cause the engine power shaft 6 and the first input shaft 3 to be connected due to the action of the one-way clutch 7, thus making it possible to accomplish driving on both the motor 2 and the engine 1.

Then, the rotational driving force from the first input shaft 3 is transmitted to the output shaft 5 through the intermediary of the third-speed drive gear 9 and the third-speed driven gear 17 engaging the third-speed drive gear 9. Thus, the driving force of the third-speed gear shift stage III is output to the drive shaft 22 through the intermediary of the final reduction drive gear 19 and the final reduction driven gear 21.

The fourth-speed gear shift stage IV is established by setting the second connecting unit 23 and the third connecting unit 24 at the neutral position and by fixedly connecting the fourth-speed drive gear 10 to the first input shaft 3 by the first connecting unit 13. At the fourth-speed gear shift stage IV, the rotational speed of the engine power shaft 6 is controlled to be higher than the rotational speed of the first input shaft 3, and the engine power shaft 6 and the first input shaft 3 are connected by the action of the one-way clutch 7 provided between the engine power shaft 6 and the first input shaft 3 thereby to perform driving on the engine 1 alone.

Then, the rotational driving force from the first input shaft 3 is transmitted to the output shaft 5 through the intermediary of the fourth-speed drive gear 10 and the fourth-speed driven gear 16 engaging the fourth-speed drive gear 10. Thus, the driving force of the fourth-speed gear shift stage IV is output to the drive shaft 22 through the intermediary of the final reduction drive gear 19 and the final reduction driven gear 21.

The fifth-speed gear shift stage V is established by setting the third connecting unit 24 at the neutral position and fixedly connecting the fifth-speed driven gear 15 to the output shaft 5 by the second connecting unit 23. At this time, setting the first connecting unit 13 at the neutral position and disengaging the second input shaft 4 from the first input shaft 3 allow driving on the motor 2 alone to be accomplished. Further, connecting the first input shaft 3 to the second input shaft 4 by the first connecting unit 13 and controlling the rotational speed of the engine power shaft 6 to be higher than the rotational speed of the first input shaft 3, and connecting the engine power shaft 6 and the first input shaft 3 by the action of the one-way clutch 7 provided between the engine power shaft 6 and the first input shaft 3 make it possible to perform driving on both the motor 2 and the engine 1.

Then, the rotational driving force from the second input shaft 4 is transmitted to the output shaft 5 through the intermediary of the fifth-speed drive gear 12 and the fifth-speed driven gear 15 engaging the fifth-speed drive gear 12. Thus, the driving force of the fifth-speed gear shift stage V is output to the drive shaft 22 through the intermediary of the final reduction drive gear 19 and the final reduction driven gear 21.

The five speed gear shift stages (the first-speed gear shift stage L, the second-speed gear shift stage II, the third-speed gear shift stage III, the fourth-speed gear shift stage IV, and the fifth-speed gear shift stage V) described above are used by switching or combining the powers of the motor 2 and the engine 1 according to the start and traveling condition of the vehicle.

As described above, the engine power shaft 6 and the first input shaft 3 are connected/disconnected by the action of the one-way clutch 7, thus making it possible to obviate the need for a heavy actuator, which would be necessary if, for example, a wet or dry type friction engagement clutch is provided. This allows the transmission to be lightweight and compact. Moreover, the engine power shaft 6 and the first input shaft 3 can be connected/disconnected simply by controlling the rotational speed of the engine power shaft 6, thus preventing the control from becoming complicated. Furthermore, if the rotational speed of the engine power shaft 6 becomes lower than the rotational speed of the first input shaft 3 (or if the rotational speed of the first input shaft 3 becomes higher than the rotational speed of the engine power shaft 6), then the engine power shaft 6 and the first input shaft 3 are disconnected by the action of the one-way clutch 7, enabling the vehicle to travel with higher energy efficiency without causing the engine 1 to drag when traveling from the power of the motor 2 and also permitting efficient regenerative braking by the motor 2 without using an engine brake at the time of deceleration while the vehicle is traveling from the power of the engine 1.

In addition, the power of the motor 2 can be output from the output shaft 5 through the intermediary of the gear shift stages of the second speed changing unit, so that the output of the motor 2 can be controlled to be relatively small, thus permitting a reduction in the size of the motor 2. Further, connecting the first speed changing unit and the second speed changing unit by the first connecting unit 13 allows the second speed changing unit to be used from the engine 1 side, thus making it possible to simplify the construction of the first speed changing unit.

Further, the gear shift stages established by the element (the second speed changing unit) installed between the second input shaft 4 to which the power of the motor 2 is input and the output shaft 5 are the first-speed gear shift stage L and the fifth-speed gear shift stage V, which are set to be lower and higher, respectively, than the gear shift stages established by the element (the first speed changing unit) installed between the first input shaft 3 and the output shaft 5. This arrangement makes it possible to increase the torque of the motor 2 during a low-speed travel and to reduce the maximum rotational speed of the motor 2, so that the size of the motor 2 can be reduced, thus allowing the transmission to be made compact.

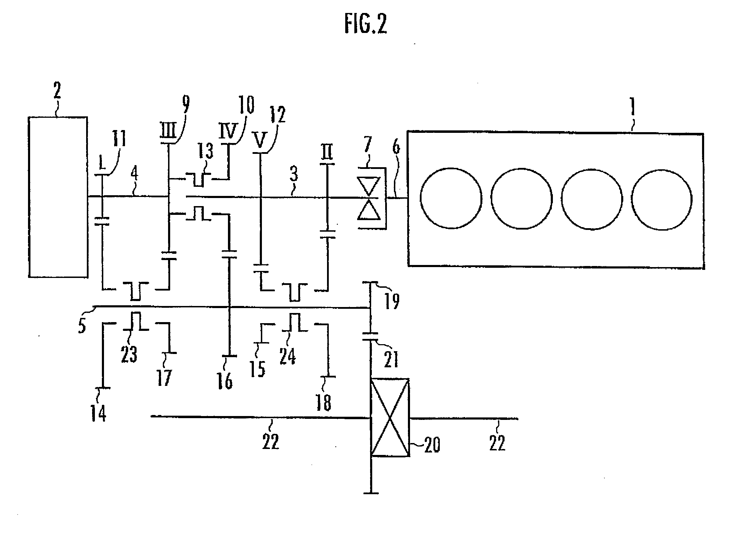

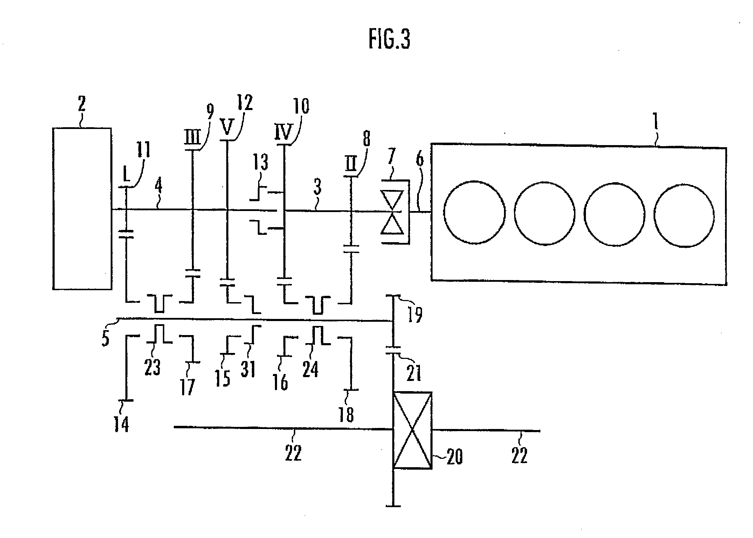

The constructions of the gears and the connecting units for establishing the gear shift stages may be altered as illustrated in Fig. 2, a second input shaft 4 may be provided with a third-speed drive gear 9, and a first input shaft 3 may be provided with a fifth-speed drive gear 12. Alternatively, as illustrated in Fig. 3, a second input shaft 4 may be provided with a first-speed drive gear 11, a third-speed drive gear 9, and a fifth-speed drive gear 12, and a first input shaft 3 may be provided with a second-speed drive gear 8 and a fourth-speed drive gear 10. Here, a first connecting unit 13 may be provided adjacently to the second input shaft 4 so as to allow the second input shaft 4 to be connected to the first input shaft 3 through the intermediary of the fourth-speed drive gear 10 by the first connecting unit 13. Further, a fifth-speed drive gear 12 can be also connected to an output shaft 5 by a fourth connecting unit 31. Further, although not illustrated, a drive gear or a driven gear of a sixth-speed gear shift stage or more can be additionally provided to increase the number of gear shift stages.

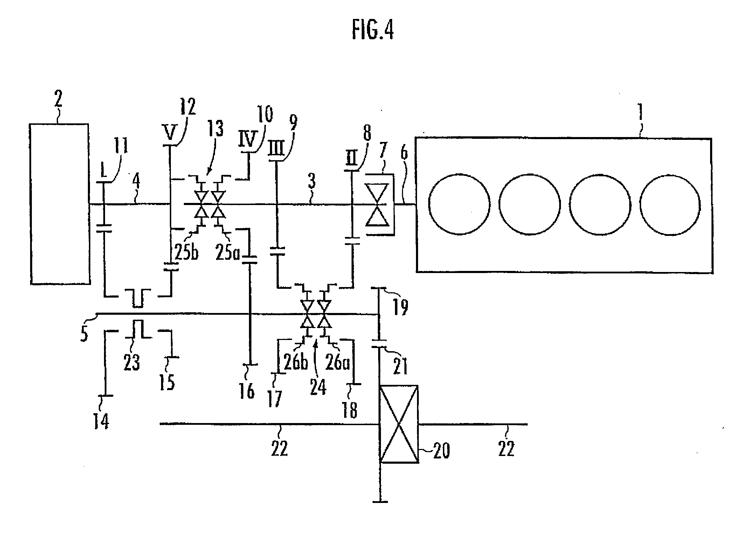

In a first embodiment of the invention and illustrated in Fig. 4, each of a first connecting unit 13 and a third connecting unit 24 may be provided with a one-way clutch. More specifically, the first connecting unit 13 may be divided into two portions, one portion being adjacent to a fifth-speed drive gear 12 and the other portion being adjacent to a fourth-speed drive gear 10, and one-way clutches 25a and 25b may be interposed between each of the two portions and a first input shaft 3. Similarly, the third connecting unit 24 may be divided into two portions, one portion being adjacent to a second-speed drive gear 8 and the other portion being adjacent to a third-speed drive gear 9, and one-way clutches 26a and 26b may be interposed between each of the two portions and the first input shaft 3. This arrangement permits a shortened gear shifting time. More specifically, in the case of, for example, the configuration illustrated in Fig. 1, to shift from the second-speed gear shift stage II to the third-speed gear shift stage III, the third connecting unit 24 is disengaged by being shifted in a direction to move away from a second-speed driven gear 18, and then the third connecting unit 24 is further moved to engage with a third-speed driven gear 17. In contrast thereto, according to the configuration illustrated in Fig. 4, without disengaging one portion (the right portion in the figure) of the third connecting unit 24 and the second-speed driven gear 18, the other portion (the left portion in the figure) of the third connecting unit 24 can be engaged with the third-speed driven gear 17, and the one portion (the right portion in the figure) of the third connecting unit 24 and the second-speed driven gear 18 are disconnected by the one-way clutch 26a, so that the time required for the disengagement can be shortened.

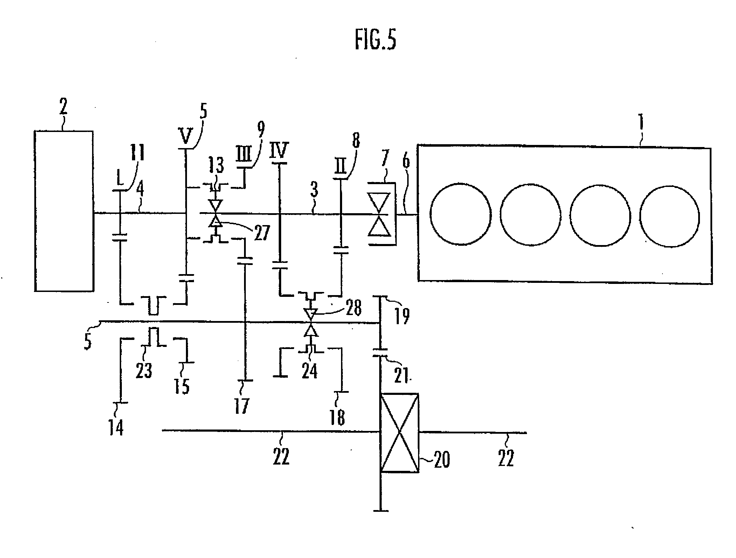

Further, in contrast to the configuration illustrated in Fig. 4, according to a second embodiment illustrated in Fig. 5, the position of a third-speed drive gear 9 and the position of a fourth-speed drive gear 10 are switched, and one-way clutches 27 and 28 are provided without dividing each of a first connecting unit 13 and a third connecting unit 24. This arrangement makes it possible to simplify the configurations of the first connecting unit 13 and the third connecting unit 24 and to provide the same advantages as those obtained by the configuration illustrated in Fig. 4.

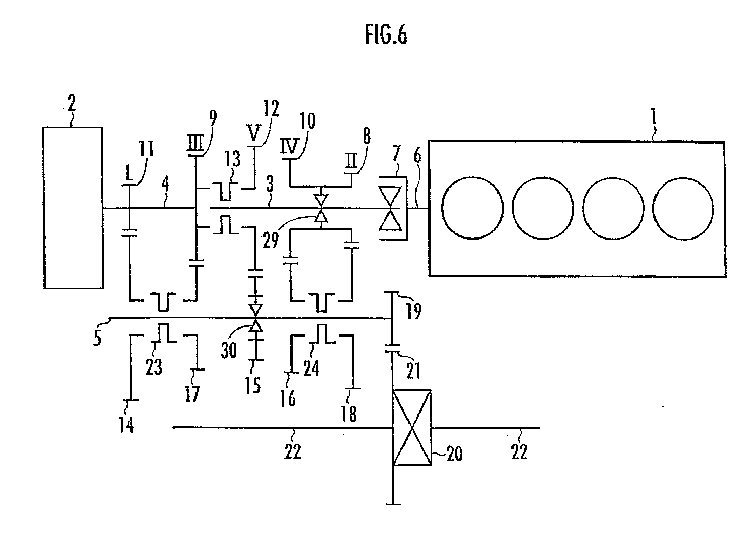

In another congfiguration illustrated in Fig. 6 and not according to the invention, a second input shaft 4 is provided with a third-speed drive gear 9 and a first input shaft 3 positioned adjacently to a third-speed drive gear 9 is provided with a fifth-speed drive gear 12. Further, a second-speed drive gear 8 and a fourth-speed drive gear 10 are combined in a connected row arrangement and supported by the first input shaft 3 through the intermediary of a one-way clutch 29, while a fifth-speed driven gear 15 is supported by an output shaft 5 through the intermediary of a one-way clutch 30. This arrangement makes it possible not only to shorten the speed changing time but also to prevent the mechanism from being complicated.

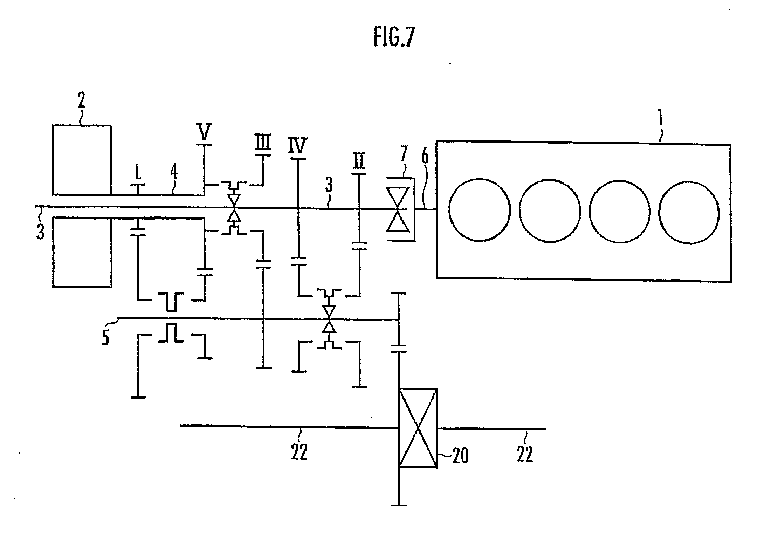

Further, in a third embodiment illustrated in Fig. 7, a first input shaft 3 penetrates a second input shaft 4, which is hollow. This makes it possible to provide the same advantages as those of the configuration illustrated in Fig. 5 and also to support the second input shaft 4 by the first input shaft 3, so that the number of components of a bearing member can be reduced, permitting a lightweight, compact construction.

In the embodiments described above, the first input shaft 3, the output shaft 5, and the rotation transmitting element formed of a plurality of gears that is located between the first input shaft 3 and the output shaft 5 to transmit rotation have been used as the first speed changing unit, while a second input shaft 4, the output shaft 5, and the rotation transmitting element formed of a plurality of gears that is located between the second input shaft 4 and the output shaft 5 to transmit rotation have been used as the second speed changing unit. Alternatively, however, a stepless speed changing mechanism, such as a CVT, for example, may be adopted as the rotation transmitting element of either one or both of the first speed changing unit and the second speed changing unit, although not illustrated.

### Industrial Applicability

The present invention adopts the one-way clutches to connect/disconnect the power of the internal combustion engine. This permits a lightweight, compact construction and also permits efficient power transmission without complicating the control, making the invention ideally used as the transmission of a hybrid vehicle.

## Claims

1. A transmission for a hybrid vehicle having an internal combustion engine (1) and a motor (2), comprising:
a speed changing unit which has a first input shaft (3) connected to a power shaft (6) of an internal combustion engine (1) and a second input shaft (4) connected to a power shaft of a motor (2), and which establishes a plurality of gear shift stages,
wherein a one-way clutch (7), which disengages the connection between the power shaft (6) of the internal combustion engine (1) and the first input shaft (3) in the case where the rotational speed of the power shaft (6) of the internal combustion engine (1) is lower than the rotational speed of the first input shaft (3), is disposed between the power shaft (6) of the internal combustion engine (1) and the first input shaft (3) wherein
the speed changing unit comprises a first speed changing unit which has a first input shaft (3) connected to the power shaft (6) of the internal combustion engine (1) and which establishes a plurality of gear shift stages and a second speed changing unit which has a second input shaft (4) connected to a power shaft of the motor (2) and which establishes a plurality of gear shift stages which are different from those of the first speed changing unit,
a connecting unit (13) which selectively engages or disengages the connection between the first input shaft (3) and the second input shaft (4) is provided between the first speed changing unit and the second speed changing unit, and
the connecting unit (13) comprises another one-way clutch which transmits a rotation or disconnects between the first input shaft and the second input shaft according to the rotational speed transmitted.

2. The transmission for a hybrid vehicle according to claim 1, wherein any one gear shift stage established by the second speed changing unit is lower than any one gear shift stage established by the first speed changing unit.

3. The transmission for a hybrid vehicle according to claim 1 or 2, wherein any one gear shift stage established by the second speed changing unit is higher than any one gear shift stage established by the first speed changing unit.

4. The transmission for a hybrid vehicle according to any one of claims 1 to 4, wherein at least one of the first speed changing unit and the second speed changing unit is constructed of a stepless speed changing mechanism that continuously establishes gear shift stages.

5. The transmission for a hybrid vehicle according to any one of claims 1 to 3, wherein
the first speed changing unit is constructed of a rotation transmitting element provided with a plurality of gears corresponding to the gear shift stages, and
the rotation transmitting element is provided with a one-way clutch that engages or disengages the transmission of the rotation between the gears according to the rotational speed to be transmitted.

6. The transmission for a hybrid vehicle according to claim 5, wherein the one-way clutch of the rotation transmitting element is provided between the gear and a supporting shaft that supports the gear.

## Patentansprüche

1. Getriebe für ein Hybridfahrzeug, dass eine Brennkraftmaschine (1) und einen Motor (2) hat, aufweisend:
eine Gangwechseleinheit, die eine erste Eingangswelle (3), die mit einer Abtriebswelle (6) einer Brennkraftmaschine (1) verbunden ist, und eine zweite Eingangswelle (4) hat, die mit einer Abtriebswelle eines Motors (2) verbunden ist, und die eine Mehrzahl von Gangschaltstufen einrichtet,
wobei eine Freilaufkupplung (7), die die Verbindung zwischen der Abtriebswelle (6) der Brennkraftmaschine (1) und der ersten Eingangswelle in dem Fall, in dem die Drehgeschwindigkeit der Abtriebswelle (6) der Brennkraftmaschine (1) niedriger als die Drehgeschwindigkeit der ersten Eingangswelle (3) ist, trennt, zwischen der Abtriebswelle (6) der Brennkraftmaschine (1) und der ersten Eingangswelle (3) angeordnet ist, wobei
die Gangwechseleinheit eine erste Gangwechseleinheit aufweist, die eine erste Eingangswelle (3) hat, die mit der Antriebswelle (6) der Brennkraftmaschine (1) verbunden ist, und die eine Mehrzahl von Gangschaltstufen einrichtet, und eine zweite Gangschalteinheit aufweist, die eine zweite Eingangswelle (4) hat, die mit einer Abtriebswelle des Motors (2) verbunden ist, und die eine Mehrzahl von Gangschaltstufen einrichtet, die sich von denen der ersten Gangwechseleinheit unterscheiden,
eine Verbindungseinheit (13), die wechselweise die Verbindung zwischen der ersten Eingangswelle (3) und der zweiten Eingangswelle (4) einlegt oder trennt, zwischen der ersten Gangwechseleinheit und der zweiten Gangwechseleinheit vorgesehen ist, und
die Verbindungseinheit (13) eine weitere Freilaufkupplung aufweist, die eine Drehung zwischen der ersten Eingangswelle und der zweiten Eingangswelle überträgt gemäß der Drehgeschwindigkeit, die übertragen wird, oder trennt.

2. Getriebe für ein Hybridfahrzeug gemäß Anspruch 1, wobei irgendeine der Gangschaltstufen, die durch die zweite Gangwechseleinheit eingerichtet ist, niedriger ist als irgendeine Gangschaltstufe, die von der ersten Gangwechseleinheit eingerichtet ist.

3. Getriebe für ein Hybridfahrzeug gemäß Anspruch 1 oder 2, wobei irgendeine der Gangschaltstufen, die von der zweiten Gangwechseleinheit eingerichtet ist, höher ist als irgendeine Gangschaltstufe, die von der ersten Gangwechseleinrichtung eingerichtet ist.

4. Getriebe für ein Hybridfahrzeug gemäß einem der Ansprüche 1 bis 4, wobei zumindest die erste Gangwechseleinheit oder die zweite Gangwechseleinheit durch einen stufenlosen Gangwechselmechanismus, der kontinuierlich Gangwechselstufen einrichtet, gebildet ist.

5. Getriebe für ein Hybridfahrzeug gemäß einem der Ansprüche 1 bis 3, wobei
die erste Gangwechseleinheit durch ein eine Drehung übertragendes Element gebildet wird, das mit einer Mehrzahl von Zahnrädern versehen ist, die den Gangschaltstufen entsprechen, und
das die Rotation übertragende Element mit einer Freilaufkupplung versehen ist, die eingreift oder die Übertragung der Rotation zwischen den Zahnrädern gemäß der Rotationsgeschwindigkeit, die zu übertragen ist, trennt.

6. Getriebe für ein Hybridfahrzeug gemäß Anspruch 5, wobei die Freilaufkupplung des die Rotation übertragenden Elements zwischen dem Zahnrad und einer tragenden Welle, die das Zahnrad trägt, vorgesehen ist.

## Revendications

1. Transmission pour un véhicule hybride ayant un moteur à combustion interne (1) et un moteur électrique (2), comprenant :
une unité de changement de vitesse qui a un premier arbre d'entrée (3) raccordé à un arbre de commande (6) d'un moteur à combustion interne (1) et un second arbre d'entrée (4) raccordé à un arbre de commande d'un moteur électrique (2), et qui établit une pluralité d'étages de changement de vitesse,
dans lequel un embrayage unidirectionnel (7), qui dégage le raccordement entre l'arbre de commande (6) du moteur à combustion interne (1) et le premier arbre d'entrée (3) dans le cas dans lequel la vitesse de rotation de l'arbre de commande (6) du moteur à combustion interne (1) est inférieure à la vitesse de rotation du premier arbre d'entrée (3), est disposé entre l'arbre de commande (6) du moteur à combustion interne (1) et le premier arbre d'entrée (3), dans laquelle :
l'unité de changement de vitesse comprend une première unité de changement de vitesse qui a un premier arbre d'entrée (3) raccordé à l'arbre de commande (6) du moteur à combustion interne (1) et qui établit une pluralité d'étages de changement de vitesse et une seconde unité de changement de vitesse qui a un second arbre d'entrée (4) raccordé à un arbre de commande du moteur électrique (2) et qui établit une pluralité d'étages de changement de vitesse qui sont différents de ceux de la premier unité de changement de vitesse,
une unité de raccordement (13) qui met en prise ou dégage sélectivement le raccordement entre le premier arbre d'entrée (3) et le second arbre d'entrée (4), est prévue entre la première unité de changement de vitesse et la seconde unité de changement de vitesse, et
l'unité de raccordement (13) comprend un autre embrayage unidirectionnel qui transmet une rotation ou se déconnecte entre le premier arbre d'entrée et le second arbre d'entrée selon la vitesse de rotation transmise.

2. Transmission pour un véhicule hybride selon la revendication 1, dans laquelle l'un quelconque des étages de changement de vitesse établis par la seconde unité de changement de vitesse est inférieur à l'un quelconque des étages de changement de vitesse établis par la première unité de changement de vitesse.

3. Transmission pour un véhicule hybride selon la revendication 1 ou 2, dans laquelle l'un quelconque des étages de changement de vitesse établis par la seconde unité de changement de vitesse est supérieur à l'un quelconque des étages de changement de vitesse établis par la première unité de changement de vitesse.

4. Transmission pour un véhicule hybride selon l'une quelconque des revendications 1 à 3, dans laquelle au moins l'une parmi la première unité de changement de vitesse et la seconde unité de changement de vitesse est fabriquée avec un mécanisme de changement de vitesse à variation continue qui établit de manière continue des étages de changement de vitesse.

5. Transmission pour un véhicule hybride selon l'une quelconque des revendications 1 à 3, dans laquelle :
la première unité de changement de vitesse est fabriquée avec un élément de transmission de rotation doté d'une pluralité d'engrenages correspondant aux étages de changement de vitesse, et
l'élément de transmission de rotation est doté d'un embrayage unidirectionnel qui met en prise ou dégage la transmission de la rotation entre les engrenages selon la vitesse de rotation à transmettre.

6. Transmission pour un véhicule hybride selon la revendication 5, dans laquelle l'embrayage unidirectionnel de l'élément de transmission de rotation est prévu entre l'engrenage et un arbre de support qui supporte l'engrenage.
